Europäisches Patentamt

European Patent Office

Office européen des brevets

(19)

(11) Numéro de publication: **0 214 028**
**B1**

(12) **FASCICULE DE BREVET EUROPEEN**

(45) Date de publication du fascicule du brevet: **06.02.91**

(51) Int. Cl.⁵: **A 01 G 13/00, E 04 H 17/26**

(21) Numéro de dépôt: **86401764.5**

(22) Date de dépôt: **05.08.86**

(54) **Procédé pour la réalisation d'un brise vent et chariots pour la mise en oeuvre de ce procédé.**

(30) Priorité: **20.08.85 FR 8512603**

(43) Date de publication de la demande:
**11.03.87 Bulletin 87/11**

(45) Mention de la délivrance du brevet:
**06.02.91 Bulletin 91/06**

(84) Etats contractants désignés:
**BE CH DE GB IT LI NL**

(56) Documents cités:
**FR-A-2 080 012**
**US-A-2 914 270**
**US-A-4 046 353**

(73) Titulaire: **N.T.A. INTERNATIONAL (S.A.)**
**48 avenue de l'Arrousaire**
**F-84000 Avignon (FR)**

(72) Inventeur: **Biancone, Georges**
**48 avenue de l'Arrousaire**
**F-84000 Avignon (FR)**

(74) Mandataire: **Bugnon-Hays, Claudine**
**PATCO S.A. 39, Boulevard René Cassin B.P.4**
**F-84170 Monteux (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 214 028 B1

## Description

La présente invention concerne un procédé pour la réalisation d'un brise vent du type comprenant une série de poteaux scellés dans le sol, au moins une série de câbles horizontaux fixés par des éléments de fixation auxdits poteaux et un filet fixé auxdits câbles par des attaches. Ces brise vent sont utilisables en agriculture d'une part et dans le domaine de la construction pour protéger des aires de loisirs ou d'activités de plein air d'autre part (piscines, camping, tennis, terrasses, auditoriums, etc...).

Il existe déjà des brise vent dont l'utilité est bien connue. Un brise vent laisse passer une fraction du vent incident, grâce à la porosité du filet. Cela présente de nombreux avantages face à la solution "paroi pleine". la paroi pleine entraîne des tourbillons du côté sous le vent, alors que le filet a une bonne efficacité sur und distance horizontale égale à 7 ou 8 fois sa hauteur (pour 6 m de haut, un filet est efficace sur 40 à 50 m). Le filet a une porosité de 20 à 80% par exemple, choisie en fonction de la nature de la zone à protéger. On peut également prévoir des zones non poreuses, sur une partie de la surface du brise vent ou en totalité.

Le brise vent le plus ancien est constitué par une haie vive ou par un rideau d'arbres tels que peupliers ou cyprés. Ces brise vent naturels sont certes esthétiques mais ils présentent en pratique de nombreux inconvénients:

encombrement en largeur par les racines des arbres, la zone cultivable est notablement réduite,

entretien très onéreux, la taille et l'élagage des arbres sont très chers en main d'oeuvre,

la mort d'un arbre entraîne une brèche qu'il est difficile de colmater, efficacement et esthétiquement parlant,

pas de possibilité de démontage et remontage immédiats,

temps d'attente pour obtenir une bonne efficacité.

Ainsi depuis la mise au point des filets poreux en matière synthétique a-t-on pensé à réaliser des brise vent artificiels.

Il existe depuis quelques années dans les régions agricoles de différents pays des brise vent constitués par des supports verticaux, de diverses natures, sur lesquels on fxie des filets produits industriellement. En général, ces brise vent sont de faible hauteur 2,50 m à 3 m. Les supports ou poteaux, régulièrement espacés, sont en bois, en profilés d'acier ou en béron armé. Pour des hauteurs supérieures, par exemple 4 m ou plus, on utilise les mêmes supports mais avec des haubans situés dans des plans perpendiculaires au plan général du filet comme il est d'usage pour les mâts de bâteaux ou d'antennes. On a donc de part et d'autre du plan du filet, une zone perdue pour l'agriculture et une esthétique peu satisfaisante.

Par contre, les entraxes entre poteaux ne sont que de l'ordre de 1,50 à 2,00 m pour les poteaux en bois avec haubans ce qui implique une mise en oeuvre longue et beaucoup de matériaux. La fixation des filets s'effectue par clouage, le filet étant pris entre le poteau et une latte. En général, le filet est fixé côté "au vent" et le battement du filet sur les poteaux entraîne une usure prématurée de celui-ci par frottement, en particulier si les poteaux sont en béton ou en acier. Les poteaux sont reliés entre eux, en tête et en pied, par un fil de fer ordinaire, le filet étant attaché sur ces deux fils et sur les poteaux. Cette solution présente un grave inconvénient; le filet sous l'effet du vent prend la forme d'une voile et il s'ensuit un phénomène de battement engendrant une usure du filet. Certains fabricants utilisent des fers, genre fers à béton, en forme de la lettre grecque "gamma", pour rigidifier le filet entre deux poteaux; ces "gamma à l'envers" sont fixés en pied de poteau sur le fil de fer inférieur et à mi-portée, la boucle des gamma est fixée sur le fil de fer supérieur. On dispose un gamma sur chaque face du filet en les ligaturant entre eux au travers du filet.

Cette solution est certes un progrès mais l'usure du filet demeure et l'esthétique n'y gagne pas.

La mise en oeuvre des brise vent actuels est le plus souvent traditionnelle. Elle nécessite des échelles ou échafaudages déplaçables et il est difficile de mettre ainsi rapidement en oeuvre des brise vent dépassant 3 m de haut, même en s'aidant d'une nacelle à déplacement hydraulique montée sur un petit camion.

La présente invention a pour objet de concevoir un procédé pour la réalisation d'un brise vent dudit type permettant d'éliminer tous les inconvénients cités plus haut et de simplifier et mécaniser l'ensemble des opérations de mise en oeuvre du brise vent quelle que soit sa longueur.

La présente invention consiste à réaliser un brise-vent selon la revendication 1.

Le brise vent mis en place suivant le procédé selon l'invention comprend des poteaux auto-résistants, encastrés dans le sol, ne nécessitant pas de haubans, donc gain de surface utilisable (l'épaissseur totale du brise-vent n'excède pas 20 cm dans le cas général). Les poteaux auto-résistants sont préférentiellement en béton précontraint, matériau réputé pour sa résistance, sa légèreté, comparé au béton armé, sa durabilité (matériau non fissuré, c'est une garantie tous risques aux intempéries). Le béton peut être coloré dans la masse (par exemple en vert) ou peint en usine. Il ne nécessite aucun entretien. En variante, on peut utiliser des tubes d'acier, de section rectangulaire par exemple, creux ou remplis de béton, mais sauf cas particulier, le béton précontraint a un méilleur rapport qualité/prix dans les pays industrialisés. Les poteaux peuvent avoir une section constante sur leur hauteur ou être à inertie variable. Ils peuvent comporter ou non des renforts intérieurs ou extérieurs tout en conservant une section de hauteur réduite dans le sens des efforts. La section peut être rectangulaire, en Té ou en I ou similaire suivant les exigences du calcul.

Afin de supprimer les haubans, l'invention conçoit une solution dans laquelle les poteaux sont encastrés dans le sol, suivant une hauteur ou "fiche" déterminée par le calcul en fonction des caractéristiques du brise vent et de la nature du sol. L'encastrement selon l'invention est réalisé dans un fût préfabriqué ou semi-préfabriqué, qui assure une mise en oeuvre simple et précise, économique et sûre et permet éventuellement le démontage du brise vent, ce qui est bien entendu impossible avec les brise vent naturels. Le brise vent peut être entièrement situé dans un plan, ou avoir toute forme polygonale souhaitée, vue en plan.

A titre d'exemple non limitatif, l'entraxe des poteaux peut être de l'ordre de 3 à 4 m, cet entraxe est un optimum pour une bonne tenue des filets actuellement dans le commerce. La hauteur des poteaux hors sol dépassera rarement 6 à 7 m, mais il est possible de calculer des poteaux adaptés à tous les besoins, suivant les règles "neige et vent".

Le procédé selon l'invention est utilisé de préférence pour la réalisation d'un brise vent comprenant deux séries de câbles dont la première est située sur une face du filet et la deuxième sur autre face du filet. Dans ce cas, il consiste à mettre en place sur les éléments de fixation d'abord la première série de câbles, ensuite le filet et enfin la deuxième série de câbles, les éléments de fixation étant bloqués à la fin de ces trois opérations.

Pour la réalisation d'un brise vent comprenant un filet constitué de deux parties inférieure et supérieure, le procédé selon l'invention consiste à mettre en place la série de câbles intérieurs pour les deux filets supérieur et inférieur, à mettre en place le filet inférieur, à mettre en place le filet supérieur, à mettre en place ensuite les câbles extérieurs pour les deux filets et enfin à procéder au blocage des dispositifs de fixation pour les filets inférieur et supérieur; les dispositifs de blocage maintenant ainsi les filets et les séries de câbles.

Une mode particulier de réalisation du procédé concerne et la fixation du filet sur la structure auto-résistante. L'élément de fixation selon l'invention comporte un boulon destiné à être fixé par sa tête en position horizontale sur un poteau, deux rondelles de serrage entre lesquelles s'étendent un câble d'eine première série de cables le filet et un cable d'une deuxième série de cables, une rondelle comportant un écrou pour son serrage en direction de l'autre rondelle les faces situées l'une en regard de l'autre desdites rondelles présentent une configuration générale concave. Ainsi "l'effet de voile" a tendance à écarter encore plus le filet qui ne frottera jamais, malgré l'effet de battement, sur le support. Diverses solutions de fixations sont possibles, elles comportent en général des fils d'acier (et non du fil ordinaire) tendus horizontalement à un entraxe régulier, p.e. 60 cm. Un fil d'acier est disposé sur chaque face du filet, enserrant celui-ci. Des agrafes du type "nez de porc" du commerce prennent les deux fils, bloquant ainsi le filet, par exemple tous les 40 cm. "L'effet de voile" ne joue alors que sur 60 cm×40 cm, ce qui limite considérablement la flèche et le battement.

L'esthétique y gagne considérablement. Dans le cas de brise vent pour des aires de sport ou de loisirs, on peut fixer un filet de chaque côté des poteaux, ce qui améliore l'esthétique, permet des effets décoratifs et donne une atténuation du vent encore meilleure, grâce à la double paroi poreuse. Tous types de filets traités et garantis aux ultra violets sont utilisables.

La présente invention concerne également un chariot pour la mise en oeuvre dudit procédé selon l'invention.

Le chariot selon l'invention comporte un châssis muni de moyens pour son déplacement au sol et d'une plate forme inférieure fixe, un dispositif de support situé à l'une des extrémités de la plate forme et destiné à recevoir un rouleau de filet vertical à partir duquel peut être déroulé le filet au fur et à mesure du déplacement du chariot, deux montants verticaux dont le premier est disposé dans la partie opposée au support et le deuxième dans la partie centrale de la plate forme, ledit premier montant comportant des moyens pour bloquer les extrémités de câbles de la ou des séries de câbles tandis que le deuxième montant comporte des moyens pour le guidage des câbles.

Suivant un mode de réalisation préféré, le chariot selon l'invention comporte de plus sur la partie opposée au rouleau de filet une plate forme mobile en direction verticale portant un deuxième support pour un deuxième rouleau de filet, des moyens de commande étant prévus pour le levage et l'abaissement de la plate forme mobile. Généralement, pour des brise vent de 6 m de haut, on utilise deux filets de 3 m de large, superposés et liés ensemble. Pour des hauteurs jusqu'à 4 m, les brise vent n'auront qu'un seul lé. Deux hommes seulement peuvent mettre en oeuvre tous types de brise vent avec le procédé selon l'invention.

D'atures réalisations et avantages de l'invention ressortiront de la description qui va suivre et en se référant aux dessins annexés.

Sur ces dessins:

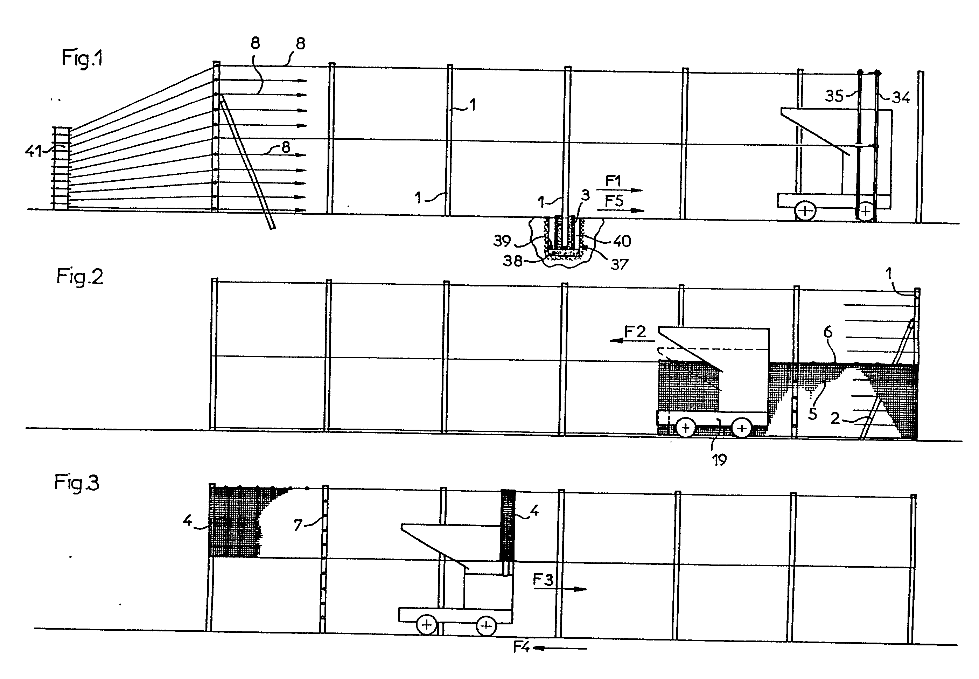

les figures 1, 2 et 3 sont des vues en élévation latérale très schématiques montrant la mise en oeuvre du procédé selon l'invention,

la figure 4 est une vue en élévation partiellement en coupe du dispositif de fixation selon l'invention,

la figure 5 est une vue en perspective partielle du dispositif de fixation représenté à la figure 4,

la figure 6 est une vue en élévation latérale d'un chariot selon l'invention, et

la figure 7 est une vue en élévation frontale du chariot représenté à la figure 6.

Le brise vent selon l'invention comprend des poteaux (1) auto-résistants, généralement en béton précontraint; l'extrémité du plan du brise vent est renforcée par un poteau contre-fiche (2), assemblé mécaniquement par une bride métallique au poteau extrême (1), les poteaux sont encastrés dans le sol, dans des fûts (3) et bloqués par un mortier dont le détail est décrit plus loin.

Le filet comprend en général deux lés (4, 5) superposés et reliés ensemble par des attaches (6). Le filet est situé de préférence côté sous le vent.

Sur les poteaux (1) sont postionnées, avant mise à la verticale de ceux-ci, des pièces de fixation (7), régulièrement espacées, tenant à hauteur des fils d'acier (8). Ceux-ci constituent la nappe support du filet, qui est constituée de la façon suivante:

un seul fil d'acier en haut et en bas pour chaque lé horizontal de filet, ledit filet est retourné de 5 cm environ autour de ce fil et fixé par des attaches, compatibles avec le type de filet.

les niveaux de fil intermédiaires, comportent deux fils acier situés de part et d'autre du filet, et agrafés tous les 40 cm environ dans le sens horizontal par les agrafes.

Le poteau (1) a une section rectangulaire, il est renforcé par des armatures non représentées et du côté sous le vent il comporte un rail (9) de scellement s'étendant sur toute sa hauteur hors sol.

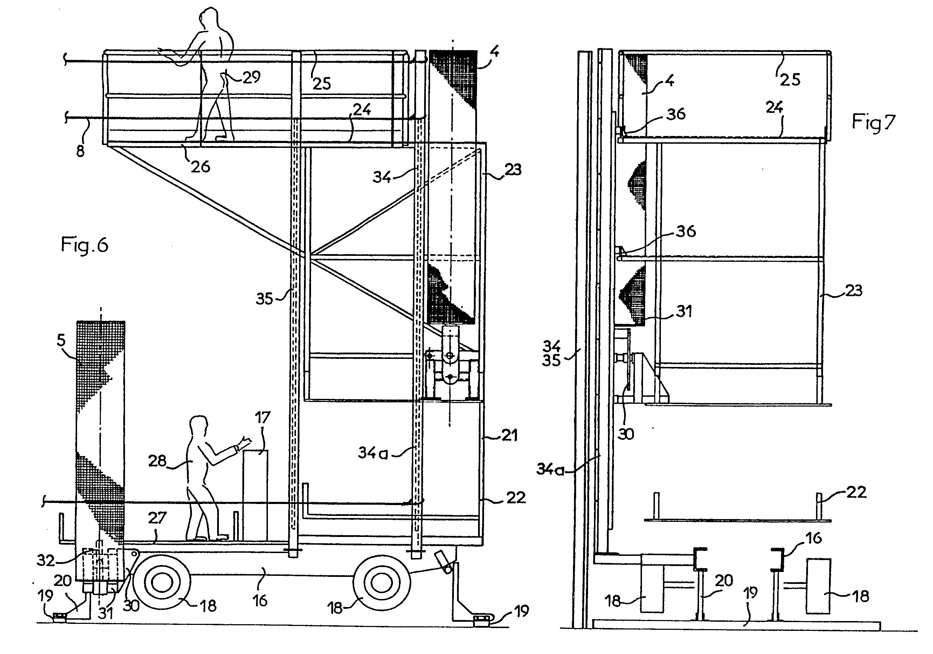

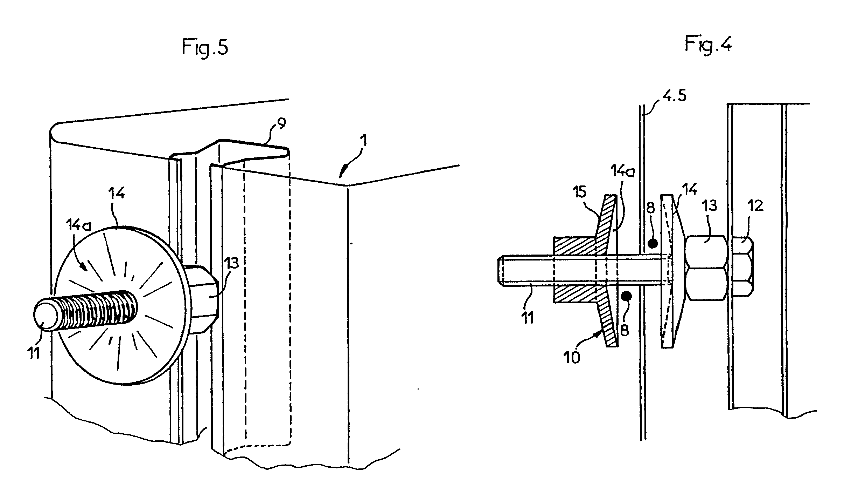

Ces rails permettent de disposer à espacement prédéterminé les éléments de fixation selon l'invention représentés plus en dètail aux figures 4 et 5.

Le dispositif de chaque élément de fixation (7) comprend un boulon (11) dont la tête (12) coopère avec le rail (9), un écrou en matière plastique (13) solidaire d'une rondelle (14) dont la face opposée à l'écrou (13) est légèrement concave. Le boulon supporte les deux fils d'acier (8) situés de part et d'autre du filet (4, 5), que l'on perfore à l'emplacement du boulon—un deuxième écrou (15) avec une rondelle, identique à l'écrou (14) assure le serrage des deux fils sur le filet. La déformation des faces concaves assure un blocage parfait. Il peut être ajouté, si jugé nécessaire, un contre-écrou. La fabrication des dispositifs de fixations, en particulier le boulon à rondelle concave intégrée, implique un moule spécialement conçu à cet effet.

Bien entendu, le positionnement des boulons suivant un entraxe précis, fonction de filet et de la hauteur du brise vent (de l'ordre de 60 cm en général) est facilité par l'adoption du rail (9) mais on peut utiliser tout autre mode de fixation tel que trou forré dans le béton, recevant une cheville à expansion, trou traversant le poteau de part en part, tige filetée scellée remplaçant le boulon (ou similaires).

L'utilisation d'un fil aciéré permet une bonne tension de ceux-ci sans relaxation progressive sous l'effet du vent. On utilise par exemple un fil ovale jauge de Paris de 13 sur jauge de 15 aciéré, galvanisé classe B, rupture >500 kg par fil allongement 2%, alors qu'un fil ordinaire jauge de (16) a une rupture de 160 kg et un allongement beaucoup trop élevé. La tension des fils est faite symétriquement grâce à des tendeurs type vendu sous la dénomination commerciale Phenox par exemple ne nécessitant pas la coupe du fil, en équilibrant les allongements à chaque extrémité du plan du brise vent.

Aux figures 6 et 7 est représenté en détail un chariot pour la mise en oeuvre du procédé selon l'invention. Ce chariot doit avoir une largeur réduite, ne dépassant pas le gabarit routier. Le chariot comprend un chassis 16 à quatre roues, motrices ete directrices (18), un moteur et un pupitre de commande (17).

Sur le chassis on a prévu deux dispositifs de stabilisation (19) fixés sur des bras mobiles (20) à l'avant et à l'arrière dudit chassis. Ces stabilisateurs sont démontables.

Une plate forme élévatrice légère (21) est disposée sur la demi-longueur de l'engin. Elle comprend une partie fixe (22) et une partie mobile (23), pouvant être déplacée à partir du pupitre de commande par tout moyen connu; la partie mobile est surmontée d'une plate forme (24) avec garde corps (25). Cette passerelle a un porte à faux (26) qui recouvre sensiblement la dimension du chassis auto-moteur. En position basse, la plate forme (24) ménage sous elle le passage d'un homme debout sur le chassis revêtu d'un platelage fixe (27). L'ensemble présente deux postes de travail. L'opérateur (28) sur la plate forme (27) mettra en oeuvre la demi zone inférieure du brise vent et assurera la commande de l'engin. L'opérateur (29) sur la plate forme élévatrice (24) mettra en oeuvre la demi zone supérieure du brise vent.

On voit sur la figure 7 que la partie mobile de la plate forme élévatrice est déportée sur le côté afin que l'opérateur puisse être à proximité du filet à placer.

Le chariot selon l'invention comporte de plus deux supports (30) de rouleaux de filet (longueur utile par exemple 3 m). Ces supports se composent d'un plateau tournant (31) sur lequel est fixé un tube (32) servant de guide au rouleau de filet. L'ensemble plateau+tube est pivotant de 90° dans le sens de la longueur de la remorque pour faciliter l'introduction des rouleaux sur l'axe tubulaire. Un dispositif est prévu pour obtenir les deux positions, horizontale et verticale. Le premier support est fixé sur le chassis de l'engin, au ras du sol, le second présente un plateau au même niveau que l'extrémité supérieure du premier filet. Il est fixé à l'extérieur de la plate forme élévatrice mobile (23).

Dans le cas d'un brise vent inférieur ou égal à 4 m de haut, on n'utilisera que le support inférieur, mais avec un tube guide (32) de longueur appropriée.

Le chariot est complété par un ensemble tire-fils d'acier: cet ensemble se compose de deux tubes rectangulaires (34 et 35) sur lesquels sont fixés des fers plats (34a et 35a). Le plat (34a) sert à claveter ou fixer les extrémités des fils d'acier à dérouler, le plat (35a) sert de guide d'espacement de fils, il est à cet effet percé de trous munis de douilles d'usure.

Cet ensemble est démontable. Il est bien entendu tenu verticalement grâce à une coulisse (36) fixée sur chaque tube et coopérant avec la plate forme. Le déplacement vertical de la table élévatrice est possible, ainsi que le reprise des efforts dûs au déroulage des fils. La longueur utile de la plate forme permet de travailler de poteau à poteau sans déplacer l'engin (par exemple 3 à 4 m de longueur).

On décrira maintenant la mise en oeuvre du procédé selon l'invention.

Les poteaux (1) sont préalablement équipés des pièces de fixation (7) à emplacements prédéterminés. Ils sont relevés et mis en place dans des fûts (3) (figure 4). Un trou cylindrique (37) est fait à la tarière (par exemple diamètre 0,70 m, profondeur 1 à 1,30 m). Au fond de ce trou, on coule une galette de béton (38) dont le niveau supérieur (39) est réglé avec précision (ensemble des niveaux identique pour un même brise vent). Sur cette galette on dispose un coffrage perdu résistant en béton (3), qui peut être une buse en ciment non armé ou un cylindre en carton ou un fût préfabriqué. Après alignement, on coule autour un béton (40) réalisant le massif de fondation. Après séchage du béton, le poteau est ensuite enfilé à la grue dans la réservation et il est bloqué par quatre coins. Dans le cas d'un brise vent non démontable, on coule un mortier dans le vide entre poteau (1) et fût (3). Dans le cas d'un brise vent devant être démonté, la base du poteau (1) est entourée d'un scotch, on coule une galette de mortier au fond, on remplit de sable fin sec le reste du vide, sauf la partie supérieure remplie de mortier. Après casse du mortier supérieur, il est possible d'arracher le poteau pour démontage. Les contrefiches d'extrémités (2) sont scellées au sol par un bloc de béton non représenté.

Les poteaux (1) sont équipés avec des éléments de fixation (7). On fixe sur les boulons (11) des mousquetons non représentés, par exemple par visage. Ces mousquetons comprennent un écrou sur lequel sont soudés une rondelle en acier, et un anneau du type mousqueton. Cet anneau est soudé sur un des meplats de l'écrou afin de laisser dépasser le boulon en cours de vissage.

A une distance D de l'extrémité du brise vent, on dispose un dérouleur de fils d'acier (41) à axe vertical, pouvant comprendre par exemple douze rouleaux de fil superposés. Ce dérouleur est auto-freiné. Les fils (8) sont disposés alors sur le chariot auto-moteur: ils passent dans le guide d'espacement (35) et sont clavetés ou fixés sur le plat (34). Le chariot avance alors dans le sens F1. Lorsqu'il se situe à l'aplomb du premier poteau d'extrémité les deux opérateurs passent les fils dans les mousquetons correspondants, disposés au préalable sur le premier poteau et tous les cinq poteaux (par exemple). Le chariot avence et s'arrête donc tous les cinq poteaux pour fixer les fils dans les mousquetons (la flèche entre cinq poteaux est acceptable). En extrémité de brise vent on décroche les fils du dispositif (34) et on les fixe sur le dernier poteau par tout moyen connu. On dispose sur le premier poteau une échelle, on fixe les fils de la même manière après les avoir coupés, on procède ensuite à leur tension au moyen de tendeurs non représentés et ce symétriquement en équilibrant les tours, par exemple au premier et au dernier intervalle du brise vent, ou au milieu seulement si la longueur du brise vent est modérée.

On procède alors au déroulage du lé inférieur (5) du filet. Le chariot se déplace alors dans le sens F2. La plate forme 24 est en position basse, on accroche le lé au dernier poteau (1) et on déplace le chariot jusqu'au poteau suivant. Les opérateurs fixent la partie haute et basse du filet sur les fils (8). Lorsqu'on arrive à l'aplomb du deuxième poteau, l'opérateur place les fils sur les boulons (11), tend le filet verticalement et le perfore au droit des boulons (11), puis attache au fil (8) inférieur le filet compris entre le premier et le deuxième poteau et ainsi de suite. Lorsqu'on arrive à l'aplomb des cinquièmes poteaux, où sont fixés les mousquetons de montage, l'opérateur donne du mou au filet, le soulève manuellement, la partie haute étant préalablement attachée, et récupère les mousquetons. Il procède alors comme pour un poteau courant, mais en outre il refixe les mousquetons sur les boulons (11), la rondelle enserrant le filet et le fil (8) contre la rondelle plastique (14).

Lorsqu'on arrive à l'autre extrémité, on coupe le filet et on le fixe au poteau. Dans une troisième phase, on effectue le déroulage du lé supérieur et on procède à cet effet de la même façon.

Dans une quatrième phase (sens F4), le chariot retourne à vide.

Une cinquième phase est identique à la première, elle consiste à dérouler, fixer et tendre la deuxième nappe de fils, les fils aux bords de chaque lé horizontal n'existant pas.

Une sixième phase consiste à visser les boulons (15) après avoir mis les fils (8) sous les boulons et à agrafer tous les 40 cm à l'horizontale les deux fils emprisonnant le filet.

Dans le cas des poteaux avec mousquetons, on récupère les mousquetons et on les remplace par les boulons définitifs (15) comme décrit précédemment.

**Revendications**

1. Procédé pour la réalisation d'un brise-vent du type comprenant une série de poteaux scellés dans le sol, au moins une série de câbles horizontaux fixés par des éléments de fixation auxdits poteaux et un filet fixé audits câbles par des attaches, caractérisé en ce qu'il consiste à réaliser dans le sol aux emplacements des poteaux (1) des trous cylindriques (37), à sceller dans ces trous (37) des buses (3), à mettre en place le long d'un rail (9) de scellement s'étendant sur toute la hauteur et du côté sous le vent de chacun desdits poteaux (1), les éléments de fixation (7) à des distances prédéterminées, à engager les poteaux (1) dans lesdites buses (3) et à les caler en position verticale, à mettre en place sur lesdits éléments de fixation (7) une première série de câbles (8) situés sur une face du filet (4, 5), à mettre en place sur lesdits éléments de fixation (7) ledit filet (4, 5), à mettre en place sur lesdits éléments de fixation (7) une deuxième série de câbles (8) situés sur l'autre face du filet (4, 5), à bloquer lesdits éléments de fixation (7) et à fixer ledit filet (4, 5) par des attaches sur lesdits câbles (8).

2. Procédé suivant la revendication 1, pour la réalisation d'un brise vent comprenant un filet constitué d'un filet inférieur et d'un filet supérieur montés l'un après l'autre sur les poteaux, caractérisé en ce qu'il consiste à mettre en place la première série de câbles (8) pour les deux filets supérieur ete inférieur (4, 5), à mettre en place le filet inférieur (5), à mettre en place le filet supérieur (4), à mettre en place ensuite la deuxième série de câbles (8) pour les deux filets (4, 5) et enfin à procéder au blocage des éléments de fixation (7) pour les filets inférieur (5) et supérieur (4).

3. Procédé suivant l'une quelconque des revendications 1 à 2, caractérisé en ce queles éléments de fixation (7) comporte et un boulon (11) fixé par sa tête (12) en position horizontale sur un poteau (1), deux rondelles de serrage (14, 15) entre lesquelles s'étendent un câble (8) de la première série de câbles, le filet (4, 5) et un câble de la deuxième série de câbles (8), une rondelle (15) comportant un écrou pour son serrage en direction de l'autre rondelle (14), les faces situées l'une en regard de l'autre desdites rondelles (14, 15) présentent une configuration générale concave.

4. Chariot pour la mise en oeuvre du procédé suivant l'une quelconque des revendications 1 à 2, caractérisé en ce qu'il comporte un châssis (16) muni de moyens pour son déplacement au sol (17, 18) et d'une plateforme inférieure fixe (27), un dispositif de support (30) situé à l'une des extrémités de la plate forme (40) et destiné à recevoir un rouleau de filet vertical (5) à partir duquel peut être déroulé le filet (5) au fur et à mesure du déplacement du chariot, deux montants verticaux (34, 35) dont le premier (34) est disposé dans la partie opposée au support (30) et le deuxième (35) dans la partie centrale de la plate-forme (27), ledit premier montant (34) comportant des moyens pour bloquer les extrémités de câbles (8) des séries de câbles tandis que le deuxième montant (35) comporte des moyens pour le guidage de ces câbles (8).

5. Chariot suivant la revendication (4), pour la mise en oeuvre du procédé suivant la revendication 2, caractérisé en ce qu'il comporte de plus sur la partie opposée au rouleau de filet (5) une plate forme mobile en direction verticale (24) portant un deuxième support (30) pour un deuxième rouleau de filet (4) des moyens de commande étant prévus pour le levage et l'abaissement de la plate forme mobile (24).

**Patentansprüche**

1. Verfahren zur Durchführung eines Windschirms in der Art, die aus einer Reihe von im Boden vergossenen Pfosten, wenigstens einer Reihe von Horizontalseilen, die den Pfosten durch Befestigungsgliedern befestigt sind und einem dem Seilen durch Halterungen befestigten Netz, besteht, dadurch gekennzeichnet daß es folgende Arbeitsstufen enthält: die Durchführung von zylindrischen Löchern (37) im Boden in den Lagen der Pfosten (1); das Vergiessen von Düsen (3) in diesen Löchern (37); das Einsetzen der Befestigungsgliedern (7) bei vorbestimmten Abständen längs einer Gießschiene (9), die sich auf die ganzer Höhe und auf dem Wind zugewandter Seite jedes Pfostens (1) erstreckt; das Einführen von Pfosten (1) in die Düsen (3) und das Festklemmen in Senkrechtstellung; auf den Befestigungsgliedern das Einsetzen einer ersten Seilenreihre (8) auf einer Netzseite (45); auf den Befestigungsgliedern (7), das Einsetzen einer zweiten Seilenreihre (8) auf der anderen Netzseite (45); das Festklemmen dieser Befestigungsglieder (7) und das Befestigen des Netzes (4, 5) auf diesen Seilen (8) durch Halterungen.

2. Verfahren nach Anspruch 1 zur Durchführung eines Windschirms mit einem Netz, das aus einem Netzunterteil und einem Netzoberteil, die an den Pfosten nacheinander montiert sind, gebildet ist, dadurch gekennzeichnet, daß es darin besteht, die erste Seilenreihe (8) für die zwei Netzunterteil und -oberteil einzusetzen (4, 5); den Unterteilnetz (5) einzusetzen; den Oberteilnetz (4) einzusetzen; dann die zweite Seilenreihe (8) für die beide Netz teile (4, 5) einzuseten; und schließlich, die Befestigungsglieder (7) für die Netzunterteil (5) und -oberteil (4) festzuklemmen.

3. Verfahren nach Anspruch 1 oder 2, dadurch gekennzeichnet, daß die Befestigungsglieder (7) einen Schaurabenbolzen (11) aufweist, der in einer Horizontallage an einem Pfosten (1) durch dessen Kopf (12) befestigt ist, sowie zwei Klemmscheiben (14, 15), zwischen denen sich ein Seil der ersten Seilenreihe (8), der Netz (4, 5) und ein Seil der zweiten Seilenreihre (8) erstrecken, wobei eine Scheibe (15) mit einer Mutter zwecks ihres Klemmens in Richtung der anderen Scheibe (14) versehen ist, wobei die zueinander gewandten Scheibenflächen (14, 15) eine konkave Gesamtausgestal ung aufweisen.

4. Wagen zur Durchführung des Verfahrens nach Anspruch 1—2, dadurch gekennzeichnet, daß es einen Unterbau (16) mit Bodenfahrmitteln (17, 18) und festem Untergestell (27) aufweist, sowie eine Tragvorrichtung (30) an einem End (40) des Gestells montiert, die dazu bestimmt ist, eine Vertikalnetzrolle (5) aufzunehmen, woraus das Netz (5) in dem Maße, wie der Wagen fährt, abgewickelt werden kann; zwei Vertikalpfosten (34, 35), wobei der erste (34) in dem der Tragvorrichtung (30) abgewandten Bereich und der zweite (35) in dem Mittelbereich des Untergestells (27) stehen; wobei dieser erste Pfosten (34) Mittel zum Klemmen der Seilenende (8) der Seilenreihen, und der zweite Pfosten (35) Mittel zum Führen dieser Seile (8) aufweisen.

5. Wagen nach Anspruch 4, zur Durchführung des Verfahren nach Anspruch 2, dadurch gekennzeichnet, daß er in dem der Netzrolle (5) abgewandten Bereich, ein in der Höhe bewegliches Untergestell (24) noch aufweist, das ein zweite Tragvorrichtung (30) für eine zweite Netzrolle (4) trägt, wobei Steuermittel für das Heben und das Senken des beweglischen Untergestells (24) vorgesehen sind.

## Claims

1. A process for the construction of a windscreen of the type comprising a series of posts anchored in the ground, at least one series of horizontal cables attached by fixing devices to these posts and a net attached to these cables by fasteners, characterized in that it comprises the steps of: drilling cylindrical holes (37) in the ground at the positions of posts (1); anchoring nozzles (3) in these holes (37); installing the anchoring devices (7) at predefined spacing along an anchoring rail (9) extending throughout the height and on the wind side of each post (1); inserting the posts (1) into these nozzles (3) and wedging them in vertical position; on these fixing devices (7), installing a first series of cables (8) located on one side of the net (4, 5); on these fixing devices (7) installing this net (4, 5); on these fixing devices (7), installing a second series of cables located on the other side of the net (4, 5); blocking these fixing devices (7) and fixing this net (4, 5) on these cables (8) by means of fasteners.

2. A process as claimed in Claim 1, for the construction of a windscreen comprising a net consisting of a lower net and an upper nut, assembled in succession to the posts, characterized in that it comprises the steps of: installing the first series of cables (8) for both upper and lower net (4, 5); installing the lower net (5); installing the upper net (4); next, installing the second series of cables (8) for both nets (4, 5) and last to block the fixing devices (7) for the lower (5) and upper (4) nets.

3. A process as claimed in either Claim 1 or 2, characterized in that the fixing devices (7) comprise a bolt (11), fixed in horizontal position on a post (1) by its head (12); two clamping washers (14, 15) between which extend one cable of the first series of cables (8), the next (4, 5) and one cable of the second series of cables (8), whereby one washer (15) has a nut to be clamped towards the other washer (14), and whereby the face of each washer opposing the face of the other washer (14, 15) has a generally concave configuration.

4. A truck for the implementation of the process as claimed in either Claim 1 or 2, characterized in that it comprises a chassis (16) provided with means (17, 18) for travelling on the ground and with a fixed lower platform (27); a supporting device (30) located at one end (40) of the platform and designed to carry a vertical net roll (5) from which the net (5) can be unrolled as the truck moves; two vertical stays (34, 35), the first (34) of which is located in the area opposing the supporting device (30) and the second (35) is located in the central area of the platform (27), whereby this first stay (34) comprises means to clock the cable ends (8) of cable series, while the second stay (35) comprises means for guiding these cables (8).

5. A truck as claimed in claim (4) for the implementation of the process according to Claim 2, characterized in that it further comprises, in the area opposing the net roll (5) a height-adjustable platform (24) that carries a second supporting device (30) for a second net roll (4), whereby control means are provided for raising and lowering the height-adjustable platform (24).

Fig.1

Fig.2

Fig.3

EP 0 214 028 B1

Fig.6

Fig.7

EP 0 214 028 B1

Fig.5

Fig.4

9

1

14

14a

13

11

4.5

15

14a

8

14

13

12

11

10

8